# EUROPEAN PATENT SPECIFICATION

(11) **EP 3 885 218 B1**
(45) Date of publication and mention of the grant of the patent: **20.05.2026**
(21) Application number: 19904563.4
(22) Date of filing: 28.06.2019
(51) Int. Cl.: G06V 10/56, G06V 20/56, B60W 30/12, B60W 50/14, G06V 10/44, B62D 15/02

(54) **CONTROL METHOD AND SYSTEM FOR MAINTAINING VEHICLE LANE**
STEUERUNGSVERFAHREN UND -SYSTEM ZUR BEIBEHALTUNG DER FAHRZEUGSPUR
PROCÉDÉ ET SYSTÈME DE COMMANDE DE MAINTIEN DE VOIE DE VÉHICULE

(30) Priority: 25.12.2018 CN 201811586216
(43) Date of publication of application: 29.09.2021
(73) Proprietor: Guangzhou Xiaopeng Motors Technology Co., Ltd., Guangzhou, Guangdong 510000 (CN)
(72) Inventor: ZHOU, Peiyi, Guangzhou, Guangdong 510000 (CN); ZHOU, Zebin, Guangzhou, Guangdong 510000 (CN)
(74) Representative: DREISS Patentanwälte PartG mbB
(86) International application number: PCT/CN2019/093437
(87) International publication number: WO 2020/133987

(56) References cited:
- EP-A2- 1 531 113
- CN-A- 106 256 606
- CN-A- 109 624 976
- DE-A1- 10 352 955
- DE-A1- 102010 053 964
- DE-A1- 102010 053 964
- US-A- 6 038 496
- US-A1- 2018 023 961

## Description

### TECHNICAL FIELD

The present invention relates to the technical field of vehicle intelligent assisted driving, more particularly, to a lane keeping control method and system of a vehicle.

### BACKGROUND

As people's requirements for vehicle functions are becoming higher and higher, many vehicles at home and abroad have been equipped with lane keeping control systems. This system controls the vehicle to steer in order to avoid moving on or crossing a lane line where the vehicle is located when the vehicle is approaching the lane line and has a possibility of moving on or crossing the line, which facilitates keeping the vehicle moving within the lane line and reduces the driver's driving burden.

Currently, the traditional lane keeping control system uses a same control strategy when facing different types of lane lines. However, traffic rules have different requirements for different types of lane lines. The same control strategy cannot achieve good control according to the traffic rules when facing different types of lane lines. For example, when facing a solid line, if the same control strategy as that for a dotted line is used, the vehicle may be at risk of violations and it will also bring a lot of safety hazards. EP 1531113 A2 discloses a driver assist system to support the lane holding of a motor vehicle. US 6038496 A discloses a vehicle with optical scanning device for a lateral road area. US 2018/023961 A1 discloses systems and methods for aligning crowdsourced sparse map data. DE 102010053964 A1 discloses a driver assistance system for supporting driver during transverse steering of car.

### SUMMARY

The embodiments of the present disclosure disclose a lane keeping control method and system of a vehicle, which can take different steering interventions on the vehicle in accordance with a type of a lane line, so as to keep the vehicle normally moving in the lane.

In a first aspect, the present disclosure discloses a lane keeping control method of a vehicle according to claim 1.

As an optional embodiment, in the first aspect of the embodiments of the present disclosure, the method further includes:
detecting a current speed of the vehicle and detecting whether a turn signal of the vehicle is currently turned off; and
performing the detecting the lane line in the captured video of the environment in front of the vehicle, when the current speed of the vehicle is within a preset speed range and the turn signal of the vehicle is turned off.

As an optional embodiment, in the first aspect of the embodiments of the present disclosure, the identifying the type of the lane line and determining the corresponding adjustment coefficient in accordance with the type of the lane line includes: detecting a color of the lane line; determining a first adjustment coefficient as the corresponding adjustment coefficient when the lane line is a yellow lane line; and determining a second adjustment coefficient as the corresponding adjustment coefficient when the lane line is a white lane line. Here, a value of the first adjustment coefficient is greater than a value of the second adjustment coefficient.

As an optional embodiment, in the first aspect of the embodiments of the present disclosure, the determining the second adjustment coefficient as the corresponding adjustment coefficient when the lane line is the white lane line includes: detecting a line type of the white lane line; when the line type of the white lane line is a solid line, setting the value of the second adjustment coefficient to be a first value, and determining the second adjustment coefficient as the corresponding adjustment coefficient; when the line type of the white lane line is a dotted line, setting the value of the second adjustment coefficient to be a second value, and determining the second adjustment coefficient as the corresponding adjustment coefficient. Here, the first value is greater than the second value.

As an optional embodiment, in the first aspect of the embodiments of the present disclosure, the method further includes, after the detecting the color of the lane line: when the lane line is not the white lane line or the yellow lane line, determining a third adjustment coefficient as the adjustment coefficient corresponding to the lane line.

The determining the current intervention distance for the vehicle in accordance with the nominal time of the vehicle, the lateral speed of the vehicle, the nominal offset value of the vehicle, and the adjustment coefficient includes: obtaining a current early warning lateral distance for the vehicle in accordance with the nominal time of the vehicle, the lateral speed of the vehicle, and the nominal offset value of the vehicle; and obtaining the current intervention distance for the vehicle in accordance with a product of the current early warning lateral distance for the vehicle and the adjustment coefficient.

In a second aspect, the present disclosure discloses a lane keeping control system of a vehicle according to claim 6.

As an optional embodiment, in the second aspect of the embodiment of the present disclosure, the lane keeping control system of the vehicle further includes: a condition detection unit configured to detect a current speed of the vehicle and detect whether a turn signal of the vehicle is currently turned off. Here the identification unit is configured to perform the detecting the lane line in the captured video of the environment in front of the vehicle, when the current speed of the vehicle is within a preset speed range and the turn signal of the vehicle is turned off.

As an optional embodiment, in the second aspect of the embodiments of the present disclosure, the identification unit includes: a color detection unit configured to detect a color of the lane line; a first determination unit configured to determine a first adjustment coefficient as the corresponding adjustment coefficient, when the lane lines is a yellow lane line; a second determination unit configured to determine a second adjustment coefficient as the corresponding adjustment coefficient, when the lane line is a white lane line. Here, a value of the first adjustment coefficient is greater than a value of the second adjustment coefficient.

As an optional embodiment, in the second aspect of the embodiment of the present disclosure, the second determining unit includes: a line type detection unit configured to detect a line type of the white lane line; a first determination subunit configured to set the value of the second adjustment coefficient to be a first value, and determine the second adjustment coefficient as the corresponding adjustment coefficient, when the line type of the white lane line is a solid line; and a second determining subunit configured to set the value of the second adjustment coefficient to be a second value and determine the second adjustment coefficient as the corresponding adjustment coefficient, when the line type of the white lane line is a dotted line. Here, the first value is greater than the second value.

As an optional embodiment, in the second aspect of the embodiments of the present disclosure, the identification unit further includes: a third determining unit configured to determine, after the color detection unit detects the color of the lane line, a third adjustment coefficient as the adjustment coefficient corresponding to the lane line when the lane line is not the white lane line or the yellow lane line. The calculation unit is further configured to: obtain a current early warning lateral distance for the vehicle in accordance with the nominal time of the vehicle, the lateral speed of the vehicle, and the nominal offset value of the vehicle; and obtain the current intervention distance for the vehicle in accordance with a product of the current early warning lateral distance for the vehicle and the adjustment coefficient corresponding to the lane line.

Compared with the prior art, the embodiments of the present disclosure have beneficial effects as follows.

In the embodiments of the present disclosure, a lane keeping control system of a vehicle detects, when the vehicle is within a preset speed range and is not performing steering, a video of an environment in front of the vehicle captured by a camera so as to identify a type of a lane line where the vehicle is located and to determine a corresponding adjustment coefficient. Then, the lane keeping control system determines a current intervention distance for the vehicle in accordance with a lateral speed of the vehicle, an offset value of the lane line and an adjustment coefficient corresponding to the lane line. When the current intervention distance for the vehicle is smaller than a preset distance threshold, the system determines that a front wheel of the vehicle is about to touch the line, and sends a steering intervention request corresponding to the current intervention distance for the vehicle to a steering system of the vehicle. Finally, the steering system performs a corresponding steering operation on the vehicle in accordance with the intervention request.

Thus, by implementing any of the embodiments of the present disclosure, the lane keeping control system may perform different steering interventions on the vehicle in accordance with different types of lane lines, which may effectively avoid the occurrence of illegal moving of the vehicle, and improve the user's driving experience.

### BRIEF DESCRIPTION OF DRAWINGS

In order to describe the technical solutions according to the embodiments of the present disclosure more clearly, the drawings used in the embodiments will be introduced briefly below. It is apparent to those skilled in the art that the drawings described below only illustrate some embodiments of the present disclosure, and other drawings can be obtained from these drawings without any creative labor.
FIG. 1 is a schematic flowchart of a lane keeping control method of a vehicle disclosed in an embodiment of the present disclosure.
FIG. 2 is a schematic flowchart of another lane keeping control method of a vehicle disclosed in an embodiment of the present disclosure.
FIG. 3 is a schematic diagram showing a structure of a lane keeping control system of a vehicle disclosed in an embodiment of the present disclosure.
FIG. 4 is a schematic diagram showing a structure of another lane keeping control system of a vehicle disclosed in an embodiment of the present disclosure.
FIG. 5 is a schematic diagram showing a structure of yet another lane keeping control system of a vehicle disclosed in an embodiment of the present disclosure.

### DESCRIPTION OF EMBODIMENTS

The technical solutions in the embodiments of the present disclosure will be clearly and completely described below in conjunction with the accompanying drawings in the embodiments of the present disclosure. Obviously, the described embodiments are only a part of the embodiments of the present disclosure, rather than all the embodiments.

It should be noted that the terms "first" and "second" and the like in the specification and claims of the present disclosure are used to distinguish different objects, rather than to describe a specific sequence. The terms "including/comprising" and "having" and any variations thereof in the embodiments of the present disclosure are intended to cover non-exclusive inclusions. For example, a process, a method, a system, a product, or a device that includes a series of steps or units is not necessarily limited to those clearly listed steps or units, but may include other steps or units that are not clearly listed or are inherent to the process, the method, the product, or the device.

The embodiments of the present disclosure disclose a lane keeping control method and system of a vehicle, which may take different steering interventions on the vehicle in accordance with the types of the lane lines, so as to keep the vehicle normally moving in a lane. A detailed description will be given below in conjunction with the accompanying drawings.

### Embodiment 1

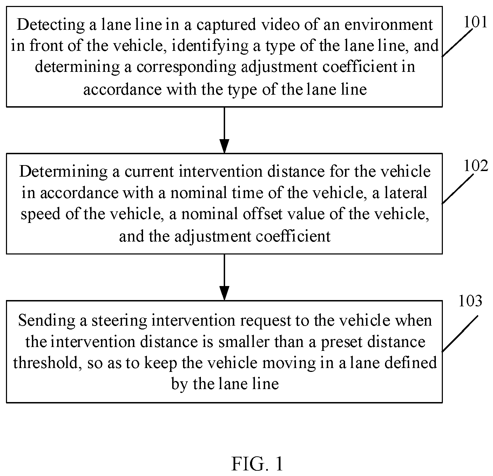

Reference may be made to FIG. 1, which is a schematic flowchart of a lane keeping control method of a vehicle disclosed in an embodiment of the present disclosure. As shown in FIG. 1, the method may include steps as follows.

At 101, a lane line in a captured video of an environment in front of the vehicle is detected, a type of the lane line is identified, and a corresponding adjustment coefficient is determined according to the type of the lane line.

In an embodiment of the present disclosure, the video of the environment in front of the vehicle may be obtained by a driving recorder, which is not particularly limited in the embodiment of the present disclosure.

In an embodiment of the present disclosure, the lane keeping control system of the vehicle (hereinafter, abbreviated as "the system") is in an ON state by default. In order not to interfere with the operation of the driver too much, an enabling condition of the system needs to be set, such that the system takes lane keeping control on the vehicle only when the vehicle is moving stably.

As an optional embodiment, the system may determine whether to perform lane keeping control on the vehicle by the process of detecting a current speed of the vehicle and detecting whether a turn signal of the vehicle is currently turned off; and performing a step of detecting a lane line in a captured video of an environment in front of the vehicle, if the current speed of the vehicle is within a preset speed range and the turn signal of the vehicle is turned off. Specifically, the system monitors the current speed of the vehicle in real time. When the current speed of the vehicle is lower, it may be considered that the current traffic condition is in a congested state, and the driver needs to control the vehicle to steer, go straight or back up frequently. At this time, it is not suitable for the system to perform the lane keeping control on the vehicle. When the current speed of the vehicle is too high, the driver needs to concentrate on driving. At this time, it is not suitable for the system to perform the lane keeping control on the vehicle either, and the system can issue an overspeed alert to the driver. In addition, when the driver turns on the turn signal, it indicates that the driver has the intention to steer. The vehicle may move on the line when steering. At this time, in order to ensure a successful steering of the vehicle, the system does not intervene in the steering of the vehicle. For example, a preset speed range of the system is 60~100km/h. When the vehicle is moving on the highway, the current speed of the vehicle is 80km/h and the driver does not turn on the turn signal, the system will perform lane keeping control on the vehicle. It can be seen that the system can be ensured not to have excessive interference to the driver by setting an enabling condition for the system to perform lane keeping control.

Alternatively, the system is provided with an ON/OFF button on the vehicle, and the driver may turn on or off the system at any time, such that the system is more in line with the driver's personal usage habits.

As an optional embodiment, the system detects a lane line in a captured video of an environment in front of the vehicle, identifies a type of the lane line, and determines a corresponding adjustment coefficient in accordance with the type of the lane line. Specifically, the system detects a position of a lane line in a video of an environment in front of the vehicle in accordance with an edge recognition algorithm, obtains color of the lane line, such as white or yellow, by detecting gray values of pixel points at the position of the lane line in the video, detects a line type of the lane line, such as a solid or dotted line, using Hough transform, and determines a type of the lane line in accordance with the color and the line type of the lane line, so as to set, for the lane line, an adjustment coefficient corresponding to the type of the lane line. For example, the adjustment coefficient for a white dotted lane line may be 1, and the adjustment coefficient for a yellow solid lane line may be 2. Thus, the type of the lane line can be accurately identified based on the edge recognition algorithm and the Hough transform.

Here, the adjustment coefficient is determined according to different requirements of various types of lane lines in traffic laws.

By implementing the above method, when meeting the enabling condition, the system may accurately identify the type of the lane line where the vehicle is currently located, so as to set the current adjustment coefficient for the vehicle.

At 102, a current intervention distance for the vehicle is determined in accordance with nominal time of the vehicle, a lateral speed of the vehicle, a nominal offset value of the vehicle and the adjustment coefficient.

In an embodiment of the present disclosure, the nominal time is a virtual time set in nominal parameters, which is used to indicate time spent by an outer edge of a front wheel of the vehicle to reach an inner edge of a lane line and may be set to T. The lateral speed may be detected by a sensor arranged on the body of the vehicle, and may be set to v. The nominal offset value is a virtual distance set in the nominal parameters, which is used to indicate a lateral distance over which the inner edge of the lane line extends in a direction towards the vehicle and may be set to Offset. The intervention distance is a distance value used to determine whether the current vehicle has a risk of moving on the line, can be calculated from the above parameters, and may be set to S.

As an optional embodiment, a current early warning lateral distance for the vehicle is obtained in accordance with a calculation of the nominal time of the vehicle and the lateral speed of the vehicle and further in accordance with an offset value from the lane line. The current intervention distance for the vehicle is obtained in accordance with a product of the current early warning lateral distance for the vehicle and the adjustment coefficient corresponding to the lane line. In particular, it may be implemented by the following way.

Firstly, a product of the nominal time T and the lateral speed v is calculated. Then, the product is added to the nominal offset value Offset to obtain an early warning lateral distance D = (T*v + Offset). Finally, a product of the adjustment coefficient t and the early warning lateral distance D is calculated to obtain the current intervention distance for the vehicle S = t*D = t*(T*v + Offset).

According to the above parameters and the above calculation processes, the intervention distance for the vehicle in different lanes may be accurately calculated.

At 103, when the intervention distance is smaller than a preset distance threshold, a steering intervention request is sent to the vehicle so as to keep the vehicle moving in a lane defined by the lane line.

In the embodiment of the present disclosure, the system may preset different distance thresholds for various types of lane lines. The distance threshold is a virtual distance set in the nominal parameters (reference may be particularly made to the setting of laws and regulations), which is used to be compared with the intervention distance obtained by calculation in step 102. Thus, it can be determined whether to perform steering intervention on the vehicle so as to keep the vehicle moving normally in the lane line.

As an optional embodiment, when the intervention distance is smaller than the preset distance threshold, a steering intervention request is sent to the vehicle to keep the vehicle moving in the lane defined by the lane line. Specifically, when the current intervention distance for the vehicle calculated in step 102 is smaller than the distance threshold preset by the system for this type of lane line, the system determines that the vehicle will move on the line if it continues moving without changing direction. For example, when the vehicle is moving in a white dotted lane at a constant speed, a distance threshold preset by the system for the white dotted lane line is 1m. Since the lane line is not straight, the vehicle may gradually approach the lane line when moving When a intervention distance for the current vehicle calculated by the system according to step 102 is 0.99m, which is smaller than the preset distance threshold of 1m for the white dotted lane line, the system determines that the vehicle is about to move on the line. At this time, the system sends a steering intervention request to the vehicle, and a steering system of the vehicle controls the vehicle to steer in accordance with the steering intervention request sent by the system. Thus, the system may intervene in the steering of the vehicle when the vehicle is about to move on the line by taking the current intervention distance for the vehicle and the distance threshold of the current lane line as a determination condition.

The steering intervention request sent by the system and performed by the steering system may achieve the effect of turning the vehicle by changing the steering torque of the vehicle or by changing the steering angle of the front wheels of the vehicle.

Thus, by implementing the method as described in FIG. 1, the system will dynamically determine whether the vehicle has the possibility of moving on the line according to the distance threshold corresponding to the type of the lane line where the vehicle is currently located and the intervention distance for the current vehicle; and send a steering intervention request when the vehicle is about to move on the line, so as to keep the vehicle moving normally in the lane.

### Embodiment 2

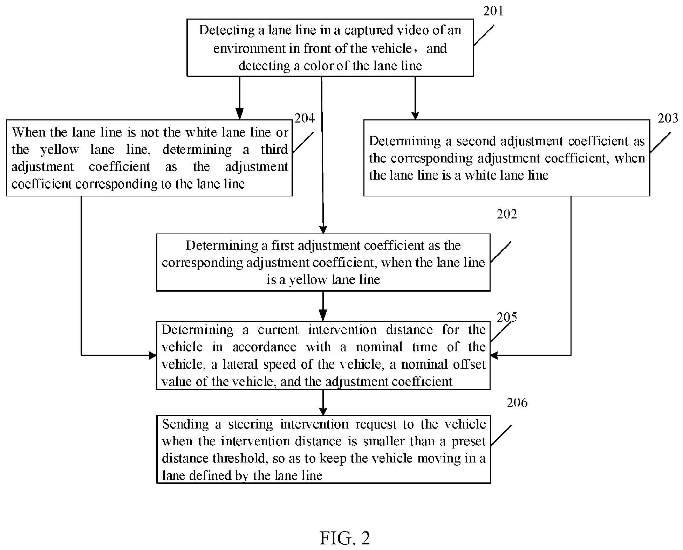

Reference may be made to FIG. 2, which is a schematic flowchart of another lane keeping control method of a vehicle disclosed in an embodiment of the present disclosure. As shown in FIG. 2, the method may include steps as follows.

At 201, a lane line in a captured video of an environment in front of the vehicle is detected, and a color of the lane line is detected.

In an embodiment of the present disclosure, the traffic laws have different requirements for lane lines of different colors. For example, a white lane line is a lane line indicating moving in the same direction, while a yellow lane line is a lane line indicating moving in opposite directions. Thus, in lanes divided by the yellow lane line, the vehicles on two sides of the yellow lane line move in opposite directions. If a vehicle moves on the yellow lane line, it will cause a huge safety risk. Therefore, the embodiment of the present disclosure first detects the color of the lane line where the vehicle is currently located, in order to provide a basis for determination in the subsequent steps.

As an optional embodiment, the system may detect a position of a lane line in a video of an environment in front of the vehicle according to an edge recognition algorithm, and obtain a color of the lane line by detecting gray values of pixel points at the position of the lane line in the video. Since brightness, an illumination angle and clarity of a lane line will have a greater impact on color detection, the system may set corresponding gray thresholds for lane lines of different colors. In addition, the system will average the gray values of the pixel points in the color area of the lane line. If an average value of the gray values is within the range defined by a certain gray threshold, it is determined that the color of the lane line is the color corresponding to the gray threshold. Therefore, the color of the lane line may be accurately determined under various conditions.

At 202, when the lane line is a yellow lane line, a first adjustment coefficient is determined as a corresponding adjustment coefficient.

In an embodiment of the present disclosure, if the color of the lane line where the vehicle is currently located is yellow, the lane keeping control system of the vehicle (hereinafter, abbreviated as "the system") sets the preset first adjustment coefficient as the current adjustment coefficient for the vehicle, and sets a value of the first adjustment coefficient to be t1, where t1>1.

At 203, when the lane line is a white lane line, a second adjustment coefficient is determined as the corresponding adjustment coefficient.

In an embodiment of the present disclosure, if the color of the lane line where the vehicle is currently located is white, the system sets a preset second adjustment coefficient as the current adjustment coefficient for the white lane line. Here, a value of the first adjustment coefficient is greater than a value of the second adjustment coefficient.

In addition, since the traffic laws have different requirements for different line types of white lane lines, the system may further detect a line type of the white lane line.

As an optional embodiment, the value of the second adjustment coefficient may be determined in a way as follows.

The system detects a line type of the white lane line. When the line type of the white lane line is a solid line, the value of the second adjustment coefficient is set to be a first value, and the second adjustment coefficient is determined as the corresponding adjustment coefficient. When the line type of the white lane line is a dotted line, the value of the second adjustment coefficient is set to be a second value, and the second adjustment coefficient is determined as the corresponding adjustment coefficient. Here, the first value is greater than the second value.

That is, assuming that the first value is t2, and the second value is t3, since the value of the first adjustment coefficient is greater than the value of the second adjustment coefficient, the following relationship between t1, t2, and t3 is satisfied: t1>t2>t3>1.

The value of each of the above adjustment coefficients is set based on the difference requirements of the traffic laws and the degree of danger of the vehicle moving on the lane line corresponding to the above adjustment coefficient. For example, the yellow lane line indicates that the vehicle on the other side of the yellow lane line is moving in an opposite direction. When a vehicle moves on the yellow lane line, it may collide with the coming vehicle moving in the opposite direction because the driver cannot react in time. The white lane line indicates that another vehicle on the other side of the white lane line is moving in the same direction. Therefore, the possibility of accidents caused by a vehicle moving on the yellow lane line is higher than that caused by a vehicle moving on the white lane line. Thus, t1>t2>t3>1 is set, so that the intervention distance of the vehicle for the yellow lane line is greater than that of the vehicle for the white lane line, which thus causes the system to perform different steering interventions for different lane lines.

At 204, if the lane line is not the white lane line or the yellow lane line, a third adjustment coefficient is determined as the adjustment coefficient corresponding to the lane line.

In an embodiment of the present disclosure, when the average value of the gray values of pixel points in the color area of the lane line obtained in step 201 is not within a gray threshold for any color set by the system, it is determined that the lane line where the vehicle is currently located is a lane line of a type other than the white lane line or the yellow lane line. The adjustment coefficients for the lane line of the other type may be set according to the requirements of traffic laws or actual moving conditions of the vehicle. For example, when the moving safety is an important factor to consider, the value t1 of the first adjustment coefficient for the yellow lane line may be set as the third adjustment coefficient. In this way, when facing other types of lane lines, the system may intervene in the steering of the vehicle as soon as possible to ensure the moving safety of the vehicle. Alternatively, the first value t2 corresponding to the white solid lane line or the second value t3 corresponding to the white dotted lane line may be set as the value of the third adjustment coefficient. Considering that if a too large adjustment coefficient is set for other types of lane lines, the system may frequently trigger lane keeping due to a narrower lane line, which will significantly affect the driving experience of the driver. Thus, an optimal setting scheme is to set the second value t3 corresponding to the white dotted lane line as the value of the third adjustment coefficient, such that the driving experience of the driver will not be affected on the premise of ensuring the moving safety.

At 205, a current intervention distance for the vehicle is determined in accordance with a nominal time of the vehicle, a lateral speed of the vehicle, a nominal offset value of the vehicle, and the adjustment coefficient.

The nominal time is a virtual time set in nominal parameters, which is used to indicate time spent by an outer edge of a front wheel of the vehicle to reach an inner edge of a lane line, and may be set to T. The lateral speed may be detected by a sensor arranged on the body of the vehicle, and may be set to v. The nominal offset value is a virtual distance set in the nominal parameters, which is used to indicate a lateral distance over which the inner edge of the lane line extends in a direction towards the vehicle and may be set to Offset. The value of the adjustment coefficient t may be a value of t1, t2, or t3 determined in step 204 depending on the type of lane line. The intervention distance is a distance value used to determine whether the current vehicle has a risk of moving on the line, can be calculated from the above parameters, and may be set to S.

As an optional embodiment, a current early warning lateral distance for the vehicle is obtained in accordance with a calculation of the nominal time of the vehicle and the lateral speed of the vehicle and further in accordance with the nominal offset value of the vehicle. The current intervention distance for the vehicle is obtained in accordance with a product of the current early warning lateral distance for the vehicle and the adjustment coefficient corresponding to the lane line. In particular, the current intervention distance for the vehicle may be obtained by the following calculation.

Firstly, a product of the nominal time T and the lateral speed v is calculated. Then, the product is added to the nominal offset value Offset to obtain an early warning lateral distance D = (T*v + Offset). And then, a product of the adjustment coefficient t and the early warning lateral distance D is calculated to obtain the current intervention distance for the vehicle S = t*D = t*(T*v + Offset). Thus, the intervention distances for the vehicle on different lanes are calculated accurately.

At 206, a steering intervention request is sent to the vehicle when the intervention distance is smaller than a preset distance threshold, so as to keep the vehicle moving in a lane defined by the lane line.

In the embodiment of the present disclosure, the system may preset different distance thresholds for various types of lane lines. The distance threshold is used to be compared with the intervention distance obtained by calculation in step 205. Thus, it can be determined when to perform steering intervention on the vehicle to keep the vehicle moving normally in the lane line.

Thus, by implementing the method described in FIG. 2, the system sets different adjustment coefficients for different types of lane lines in accordance with the level of risk arising from the vehicle moving on different types of lane lines. The higher the risk arising from the vehicle moving on a lane line is, the higher the adjustment coefficient for the lane line is. Therefore, it can adjust the intervention distance for the vehicle when the vehicle is moving in a lane defined by a different lane line. When the vehicle is moving in a lane with a higher risk arising from the vehicle moving on a lane line, its intervention distance will also become larger due to the influence of the adjustment coefficient. Therefore, the system may intervene the steering of the vehicle at a position farther away from the lane line, so as to make the vehicle avoid the safety risk as soon as possible.

### Embodiment 3

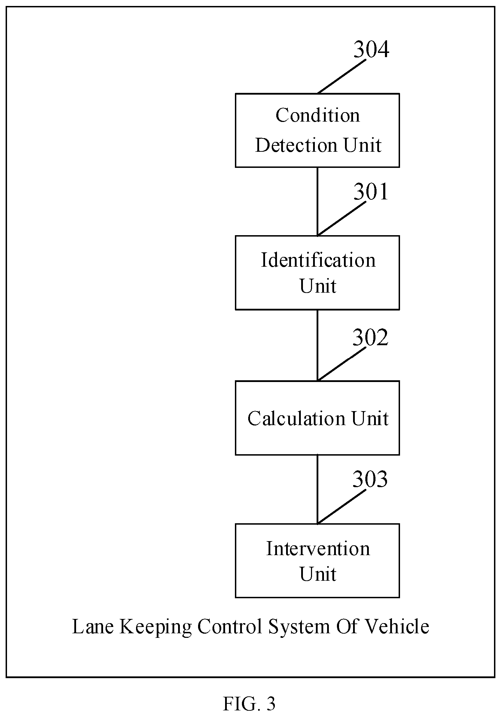

Reference may be made to FIG. 3, which is a schematic diagram showing a structure of a lane keeping control system of a vehicle disclosed in an embodiment of the present disclosure. As shown in FIG. 3, the lane keeping control system of the vehicle (hereinafter abbreviated as "the system") may include:
an identification unit 301 configured to detect a lane line in a captured video of an environment in front of the vehicle, identify a type of the lane line, and determine a corresponding adjustment coefficient in accordance with the type of the lane line;
a calculation unit 302 configured to determine a current intervention distance for the vehicle in accordance with a nominal time of the vehicle, a lateral speed of the vehicle, a nominal offset value of the vehicle, and the adjustment coefficient;
an intervention unit 303 configured to send a steering intervention request to the vehicle when the intervention distance is smaller than a preset distance threshold, so as to keep the vehicle moving in a lane defined by the lane line; and
a condition detection unit 304 configured to detect a current speed of the vehicle and detect whether a turn signal of the vehicle is currently turned off, and in particular, the identification unit 301 is configured to perform said detecting the lane line in the captured video of the environment in front of the vehicle when the current speed of the vehicle is within a preset speed range and the turn signal of the vehicle is turned off.

In an embodiment of the present disclosure, after the condition detection unit 304 determines that the vehicle currently meets the enabling condition, the identification unit 301 determines the adjustment coefficient corresponding to the type of the lane line according to the current lane line and the type thereof. The calculation unit 302 determines the current intervention distance for the vehicle according to various current parameters of the vehicle and the adjustment coefficient, such that the intervention unit 303 may intervene the steering of the vehicle when the intervention distance is smaller than the preset distance threshold.

As an optional embodiment, the identification unit 301 is configure to detect a lane line in a captured video of an environment in front of the vehicle, identify a type of the lane line, and determine a corresponding adjustment coefficient in accordance with the type of the lane line. Specifically, the identification unit 301 is configured to detect a position of a lane line in a video of an environment in front of the vehicle in accordance with an edge recognition algorithm, and obtain color of the lane line, such as white or yellow, by detecting gray values of pixel points at the position of the lane line in the video; detect a line type of the lane line, such as a solid or dotted line, using Hough transform, and determine the type of the lane line in accordance with the color and the line type of the lane line, so as to set, for the lane line, an adjustment coefficient corresponding to the type of the lane line. For example, the adjustment coefficient for a white dotted lane line may be 1, and the adjustment coefficient for a yellow solid lane line may be 2. Thus, the type of the lane line can be accurately identified based on the edge recognition algorithm and the Hough transform.

As an optional embodiment, the calculation unit 302 is configured to obtain the current early warning lateral distance for the vehicle in accordance with the nominal time of the vehicle, the lateral speed of the vehicle and the nominal offset value of the vehicle, obtain the current intervention distance for the vehicle in accordance with a product of the current early warning lateral distance for the vehicle and the adjustment coefficient corresponding to the lane line. In particular, it may be implemented by first calculating the product of the nominal time T and the lateral speed v, and adding the product to the nominal offset value Offset to get an early warning lateral distance D = (T*v + Offset); and then calculating the product of the adjustment coefficient t and the early warning lateral distance D to get the current intervention distance for the vehicle S = t*D = t*(T*v + Offset). According to the above parameters and the above calculation processes, the intervention distance for the vehicle in any of different lanes may be accurately calculated.

As an optional embodiment, when the intervention distance is smaller than the preset distance threshold, the intervention unit 303 sends a steering intervention request to the vehicle to keep the vehicle moving in the lane defined by the lane line. Specifically, when the current intervention distance for the vehicle calculated by the calculation unit 302 is smaller than the distance threshold preset by the system for this type of lane line, the system determines that the vehicle will move on the line if it continues moving without changing direction. For example, when the vehicle is moving in a white dotted lane at a constant speed, the identification unit 301 presets a distance threshold of 1m for the white dotted lane line. Since the lane line is not straight, the vehicle may gradually approach the lane line when moving. The intervention unit 303 obtains, by the calculation of the calculation unit 302, an intervention distance for the current vehicle, which is 0.99m smaller than the preset distance threshold of 1m for the white dotted lane line, the system determines that the vehicle is about to move on the line. At this time, the intervention unit 303 sends a steering intervention request to the vehicle, and the steering system of the vehicle controls the vehicle to steer in accordance with the steering intervention request sent by the system. Thus, the system may intervene in the steering of the vehicle when the vehicle is about to move on the line by taking the current intervention distance for the vehicle and the distance threshold of the current lane line as a determination condition.

Thus, by implementing the lane keeping control system of the vehicle as described in FIG. 3, the system will dynamically determine whether the vehicle has the possibility of moving on the line according to the distance threshold corresponding to the type of the lane line where the vehicle is currently located and the intervention distance for the current vehicle, and the intervention unit 303 will send a steering intervention request when the vehicle is about to move on the line, so as to keep the vehicle moving normally in the lane.

### Embodiment 4

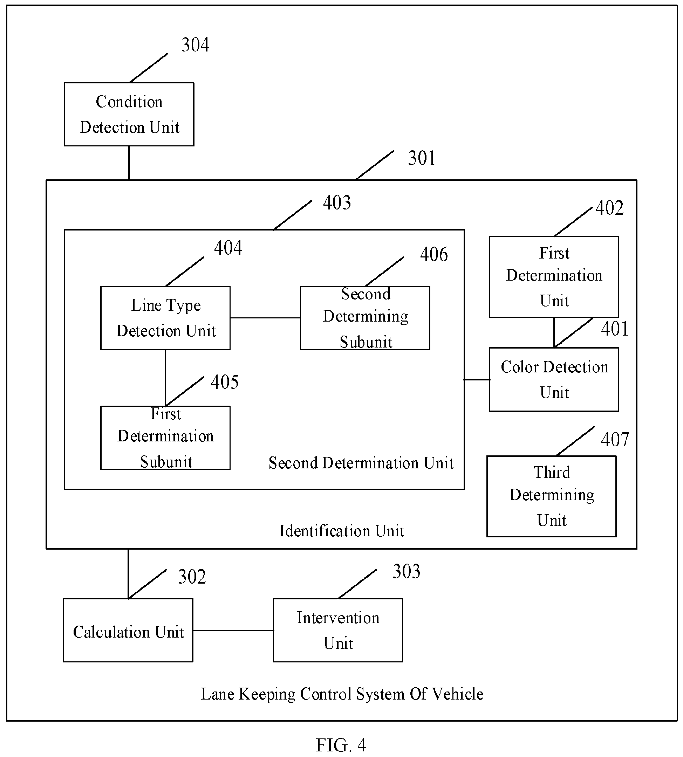

Reference may be made to FIG. 4, which is a schematic diagram showing a structure of another lane keeping control system of a vehicle disclosed in an embodiment of the present disclosure. The lane keeping control system of the vehicle as shown in FIG. 4 is a further optimization of the lane keeping control system of the vehicle as shown in FIG. 3. Compared to the lane keeping control system of the vehicle as shown in FIG. 4, the lane keeping control system of the vehicle as shown in FIG. 4 may further include:
a color detection unit 401 configured to detect a lane line in a captured video of an environment in front of the vehicle and detect a color of the lane line;
a first determination unit 402 configured to determine a first adjustment coefficient as the corresponding adjustment coefficient, when the lane line is a yellow lane line;
a second determination unit 403 configured to determine a second adjustment coefficient as the corresponding adjustment coefficient, when the lane line is a white lane line;
a line type detection unit 404 configured to detect a line type of the white lane line;
a first determination subunit 405 configured to set the value of the second adjustment coefficient to be a first value and determine the second adjustment coefficient as the corresponding adjustment coefficient, when the line type of the white lane line is a solid line;
a second determining subunit 406 configured to set the value of the second adjustment coefficient to be a second value and determine the second adjustment coefficient as the corresponding adjustment coefficient, when the line type of the white lane line is a dotted line; and
a third determining unit 407 configured to determine, after the color detection unit 401 detects the color of the lane line, a third adjustment coefficient as the adjustment coefficient corresponding to the lane line when the lane line is not the white lane line or the yellow lane line.

In an embodiment of the present disclosure, the traffic laws have different requirements for lane lines of different colors. For example, a white lane line is a lane line indicating moving in the same direction, while a yellow lane line is a lane line indicating moving in opposite directions. Thus, in lanes divided by the yellow lane line, the vehicles on two sides of the yellow lane line move in opposite directions. If a vehicle moves on the yellow lane line, it will cause a huge safety risk. Therefore, the embodiment of the present disclosure first detects the color of the lane line where the vehicle is currently located, in order to provide a basis for determination in the subsequent steps.

As an optional embodiment, the color detection unit 401 may detect a position of a lane line in a video of an environment in front of the vehicle according to an edge recognition algorithm, and obtain a color of the lane line by detecting gray values of pixel points at the position of the lane line in the video. Since brightness, illumination angle and clarity of a lane line will have a greater impact on color detection, the color detection unit 401 may set corresponding gray thresholds for lane lines of different colors, and average the gray values of pixel points in the lane line color area. If an average value of the gray values is within the range of a certain gray threshold, it is determined that the color of the lane line is the color corresponding to the gray threshold. Therefore, the color of the lane line may be accurately determined under various conditions.

As an optional embodiment, the line type detection unit 404 is configured to detect a line type of the white lane line. When the line type of the white lane line is a solid line, the value of the second adjustment coefficient is set to be a first value, and the second adjustment coefficient is determined as the corresponding adjustment coefficient. When the line type of the white lane line is a dotted line, the value of the second adjustment coefficient is set to be a second value, and the second adjustment coefficient is determined as the corresponding adjustment coefficient. Here, the first value is greater than the second value. The above is specifically implemented by the approach as follows. When the line type detection unit 404 detects that the white lane line is a white solid lane line, the first determination subunit 405 determines the value of the second adjustment coefficient as a first value, and sets the first value to be t2, where t1>t2>1. When the line type detection unit 404 detects that the white lane line is a white dotted lanes line, the second determination subunit 406 determines the value of the second adjustment coefficient as a second value, and sets the second value to be t3, where t1>t2>t3>1. The value of each of the above adjustment coefficients is set based on the difference requirements of the traffic laws and the degree of danger of the vehicle moving on the lane line corresponding to the above adjustment coefficient. For example, the yellow lane line indicates that the vehicle on the other side of the yellow lane line is moving in an opposite direction. When a vehicle moves on the yellow lane line, it may collide with the vehicle in the opposite direction because the driver cannot react in time. The white lane line indicates that the vehicle on the other side of the white lane line is moving in the same direction. Therefore, the possibility of accidents caused by a vehicle moving on the yellow lane line is higher than that caused by a vehicle moving on the white lane line. Thus, t1>t2>t3>1 is set, so that the intervention distance of the vehicle for the yellow lane line is greater than that of the vehicle for the white lane line, which thus causes the system to perform different steering interventions for different lane lines.

As an optional embodiment, when the average value of the gray values of pixel points in the color area of the lane line obtained by the color detection unit 401 is not within the gray threshold for any color set by the system, it is determined that the lane line where the vehicle is currently located is a lane line of a type other than the white lane line or the yellow lane line. The adjustment coefficient for the lane line of the other type may be set by the third determination unit 407 according to the requirements of traffic laws or the actual moving conditions of the vehicle. For example, when the moving safety is an important factor to consider, the first adjustment coefficient t1 for the yellow lane line may be set by the third determination unit 407 as the third adjustment coefficient. In this way, when facing other types of lane lines, the system may intervene in the steering of the vehicle as soon as possible to ensure the moving safety of the vehicle. Alternatively, the first value t2 corresponding to the white solid lane line or the second value t3 corresponding to the white dotted lane line may be set by the third determination unit 407 as the third adjustment coefficient. Considering that if a too large adjustment coefficient is set for other types of lane lines, lane keeping may be frequently triggered due to a narrower lane line, which will significantly affect the driving experience of the driver. Thus, an optimal setting scheme is that the third determination unit 407 sets the second value t3 corresponding to the white dotted lane line as the value of the third adjustment coefficient, such that the driving experience of the driver will be guaranteed on the premise of ensuring the moving safety.

Thus, by implementing the lane keeping control system of the vehicle described in FIG. 4, different adjustment coefficients for different types of lane lines are set in accordance with the level of risk arising from the vehicle moving on different types of lane lines. The higher the risk arising from the vehicle moving on a lane line is, the higher the adjustment coefficient for the lane line is. Therefore, it can adjust the intervention distance for the vehicle when the vehicle is moving in a lane defined by a different lane line. When the vehicle is moving in a lane with a higher risk arising from the vehicle moving on a lane line, its intervention distance will also become larger due to the influence of the adjustment coefficient. Therefore, the system may intervene the steering of the vehicle at a position farther away from the lane line, so that the vehicle may avoid the safety risk as soon as possible.

### Embodiment 5

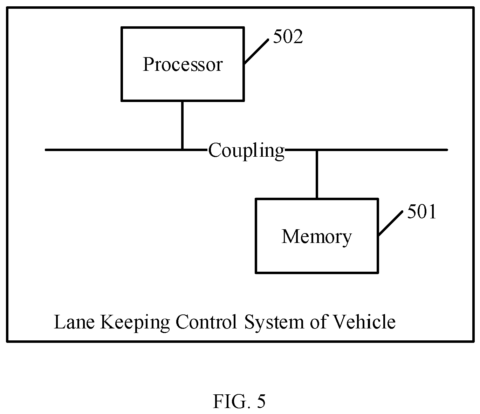

Reference is now made to FIG. 5, which is a schematic diagram showing a structure of another lane keeping control system of a vehicle disclosed in an embodiment of the present disclosure. As shown in FIG. 5, the lane keeping control system of the vehicle may include:
a memory 501 storing executable program codes; and
a processor 502 coupled to the memory 501.

The processor 502 is configured to invoke the executable program codes stored in the memory 501 to perform any of the lane keeping control methods of the vehicle as shown in FIG. 1 and FIG. 2.

A computer-readable storage medium is provided according to an embodiment which is not part of the present disclosure. The computer-readable storage medium is configured to store a computer program. The computer program may cause a computer to perform any of the lane keeping control methods of the vehicle as shown in FIG. 1 and FIG. 2.

An application issuing platform is also provided according to an embodiment which is not part of the present disclosure. The application issuing platform is configured to issue a computer program product which, when executed on a computer, causes the computer to perform a part or all of the steps in any of the methods according to the above method embodiments.

It can be appreciated that, in various embodiments of the present disclosure, values of the sequence numbers of the respective processes above do not mean a necessary order in which the processes are performed. The order in which the processes are performed depends on their functions and internal logics. The implementation of the embodiments of the present disclosure should not be limited to any exemplary order.

The units described above as separate components may or may not be physically separated, and the components displayed as units may or may not be physical units, i.e., they may be collocated or distributed on multiple network units. Some or all of the units may be selected according to actual needs to achieve the purpose of the technical solutions of the embodiments.

In addition, the functional units in the embodiments of the present disclosure may be integrated into one processing unit, or each unit may exist alone physically, or two or more units may be integrated into one unit. The above-mentioned integrated unit can be implemented in the form of hardware or software functional unit.

If the aforementioned integrated unit is implemented in the form of a software functional unit and sold or used as an independent product, it can be stored in a computer-accessible memory. Based on this understanding, the essence of the technical solution of the present disclosure, or the part that contributes to the existing technology, or all or part of the technical solution can be embodied in the form of a software product, and the computer software product is stored in a memory, including several requests to cause a computer device (which may be a personal computer, a server or a network device, etc., specifically a processor in a computer device) execute some or all of the steps of any of the above methods of the various embodiments of the present disclosure.

A person of ordinary skill in the art can understand that all or part of the steps in the various methods of the above-mentioned embodiments can be completed by a program instructing relevant hardware. The program can be stored in a computer-readable storage medium. The storage medium includes read-only Memory (Read-Only Memory, ROM), Random Access Memory (RAM), Programmable Read-only Memory (PROM), Erasable Programmable Read Only Memory (Erasable Programmable Read Only Memory, EPROM), One-time Programmable Read-Only Memory (OTPROM), Electronically-Erasable Programmable Read-Only Memory (EEPROM), Compact Disc Read-Only Memory (CD-ROM) or other optical disk storage, magnetic disk storage, tape storage, or any other computer-readable medium that can be used to carry or store data.

In the present disclosure, specific examples are used to explain the principles and implementation of the present disclosure. The description of the above embodiments is only used to help understanding the methods of the present disclosure and its core idea; at the same time, for those skilled in the art, according to the idea of the present disclosure, there may be modifications in the specific implementation according to the appended claims. In conclusion, the content described herein should not be understood as a limitation of the present disclosure.

## Claims

1. A lane keeping control method of a vehicle, comprising:
detecting a lane line in a captured video of an environment in front of the vehicle, identifying a type of the lane line, and determining a corresponding adjustment coefficient in accordance with the type of the lane line (101);
**characterized in that**,
the method further comprises:
determining (102) a current intervention distance for the vehicle in accordance with a nominal time of the vehicle, a lateral speed of the vehicle, a nominal offset value of the vehicle, and the adjustment coefficient, the nominal time being used to indicate time spent by an outer edge of a front wheel of the vehicle to reach an inner edge of a lane line, the nominal offset value being used to indicate a lateral distance over which the inner edge of the lane line extends in a direction towards the vehicle; and
sending (103) a steering intervention request to the vehicle when the intervention distance is smaller than a preset distance threshold, so as to keep the vehicle moving in a lane defined by the lane line.

2. The method according to claim 1, further comprising:
detecting a current speed of the vehicle and detecting whether a turn signal of the vehicle is currently turned off; and
performing said detecting the lane line in the captured video of the environment in front of the vehicle, when the current speed of the vehicle is within a preset speed range and the turn signal of the vehicle is turned off.

3. The method according to claim 2, wherein said identifying the type of the lane line and determining the corresponding adjustment coefficient in accordance with the type of the lane line comprises:
detecting (201) a color of the lane line;
determining (202) a first adjustment coefficient as the corresponding adjustment coefficient, when the lane line is a yellow lane line; and
determining (203) a second adjustment coefficient as the corresponding adjustment coefficient, when the lane line is a white lane line,
wherein a value of the first adjustment coefficient is greater than a value of the second adjustment coefficient.

4. The method according to claim 3, wherein said determining the second adjustment coefficient as the corresponding adjustment coefficient when the lane line is the white lane line comprises:
detecting a line type of the white lane line;
when the line type of the white lane line is a solid line, setting the value of the second adjustment coefficient to be a first value, and determining the second adjustment coefficient as the corresponding adjustment coefficient;
when the line type of the white lane line is a dotted line, setting the value of the second adjustment coefficient to be a second value, and determining the second adjustment coefficient as the corresponding adjustment coefficient,
wherein the first value is greater than the second value.

5. The method according to claim 3, further comprising, after said detecting the color of the lane line:
when the lane line is not the white lane line or the yellow lane line, determining a third adjustment coefficient as the adjustment coefficient corresponding to the lane line,
wherein said determining the current intervention distance for the vehicle in accordance with the nominal time of the vehicle, the lateral speed of the vehicle, the nominal offset value of the vehicle, and the adjustment coefficient comprises:
obtaining a current early warning lateral distance for the vehicle in accordance with the nominal time of the vehicle, the lateral speed of the vehicle, and the nominal offset value of the vehicle; and
obtaining the current intervention distance for the vehicle in accordance with a product of the current early warning lateral distance for the vehicle and the adjustment coefficient.

6. A lane keeping control system of a vehicle, comprising:
an identification unit (301) configured to detect a lane line in a captured video of an environment in front of the vehicle, identify a type of the lane line, and determine a corresponding adjustment coefficient in accordance with the type of the lane line;
**characterized in that**,
the lane keeping control system of the vehicle further comprises:
a calculation unit (302) configured to determine a current intervention distance for the vehicle in accordance with a nominal time of the vehicle, a lateral speed of the vehicle, a nominal offset value of the vehicle, and the adjustment coefficient, the nominal time being used to indicate time spent by an outer edge of a front wheel of the vehicle to reach an inner edge of a lane line, the nominal offset value being used to indicate a lateral distance over which the inner edge of the lane line extends in a direction towards the vehicle; and
an intervention unit (303) configured to send a steering intervention request to the vehicle when the intervention distance is smaller than a preset distance threshold, so as to keep the vehicle moving in a lane defined by the lane line.

7. The lane keeping control system of the vehicle according to claim 6, further comprising:
a condition detection unit (304) configured to detect a current speed of the vehicle and detect whether a turn signal of the vehicle is currently turned off,
wherein the identification unit (301) is configured to perform said detecting the lane line in the captured video of the environment in front of the vehicle, when the current speed of the vehicle is within a preset speed range and the turn signal of the vehicle is turned off.

8. The lane keeping control system of the vehicle according to claim 7, wherein the identification unit (301) comprises:
a color detection unit (401) configured to detect a color of the lane line;
a first determination unit (402) configured to determine a first adjustment coefficient as the corresponding adjustment coefficient, when the lane line is a yellow lane line;
a second determination unit (403) configured to determine a second adjustment coefficient as the corresponding adjustment coefficient, when the lane line is a white lane line,
wherein a value of the first adjustment coefficient is greater than a value of the second adjustment coefficient.

9. The lane keeping control system of the vehicle according to claim 8, wherein the second determination unit (403) comprises:
a line type detection unit (404) configured to detect a line type of the white lane line;
a first determination subunit (405) configured to set the value of the second adjustment coefficient to be a first value and determine the second adjustment coefficient as the corresponding adjustment coefficient, when the line type of the white lane line is a solid line; and
a second determining subunit (406) configured to set the value of the second adjustment coefficient to be a second value and determine the second adjustment coefficient as the corresponding adjustment coefficient, when the line type of the white lane line is a dotted line,
wherein the first value is greater than the second value.

10. The lane keeping control system of the vehicle according to claim 8, wherein the identification unit (301) further comprises:
a third determining unit (407) configured to determine, after the color detection unit (401) detects the color of the lane line, a third adjustment coefficient as the adjustment coefficient corresponding to the lane line when the lane line is not the white lane line or the yellow lane line, and
wherein the calculation unit (302) is further configured to:
obtain a current early warning lateral distance for the vehicle in accordance with the nominal time of the vehicle, the lateral speed of the vehicle, and the nominal offset value of the vehicle; and
obtain the current intervention distance for the vehicle in accordance with a product of the current early warning lateral distance for the vehicle and the adjustment coefficient corresponding to the lane line.

## Patentansprüche

1. Verfahren zur Spurhalte-Steuerung eines Fahrzeugs, umfassend:
Erfassen einer Fahrspurlinie in einem aufgenommenen Video der Umgebung vor dem Fahrzeug, Identifizieren eines Typs der Fahrspurlinie und Bestimmen eines entsprechenden Anpassungskoeffizienten gemäß dem Typ der Fahrspurlinie (101);
**dadurch gekennzeichnet, dass**
das Verfahren ferner umfasst:
Bestimmen (102) einer aktuellen Eingriffsdistanz für das Fahrzeug gemäß einer Nennzeit des Fahrzeugs, einer Lateralgeschwindigkeit des Fahrzeugs, eines Nennversatzwerts des Fahrzeugs und des Anpassungskoeffizienten, wobei die Nennzeit verwendet wird, um die Zeit anzugeben, die eine Außenkante eines Vorderrads des Fahrzeugs benötigt, um eine Innenkante einer Fahrspurlinie zu erreichen, und wobei der Nennversatzwert verwendet wird, um einen Lateralabstand anzugeben, über den sich die Innenkante der Fahrspurlinie in Richtung auf das Fahrzeug erstreckt; und
Senden (103) einer Lenkeingriffsanfrage an das Fahrzeug, wenn die Eingriffsdistanz kleiner als ein voreingestellter Distanzschwellenwert ist, um das Fahrzeug in einer durch die Fahrspurlinie definierten Fahrspur zu halten.

2. Verfahren nach Anspruch 1, ferner umfassend:
Erfassen einer aktuellen Geschwindigkeit des Fahrzeugs und Erfassen, ob ein Blinker des Fahrzeugs derzeit ausgeschaltet ist; und
Durchführen des Erfassens der Fahrspurlinie in dem aufgenommenen Video der Umgebung vor dem Fahrzeug, wenn die aktuelle Geschwindigkeit des Fahrzeugs innerhalb eines voreingestellten Geschwindigkeitsbereichs liegt und der Blinker des Fahrzeugs ausgeschaltet ist.

3. Verfahren nach Anspruch 2, wobei das Identifizieren des Typs der Fahrspurlinie und das Bestimmen des entsprechenden Anpassungskoeffizienten gemäß dem Typ der Fahrspurlinie umfasst:
Erfassen (201) einer Farbe der Fahrspurlinie;
Bestimmen (202) eines ersten Anpassungskoeffizienten als den entsprechenden Anpassungskoeffizienten, wenn die Fahrspurlinie eine gelbe Fahrspurlinie ist; und
Bestimmen (203) eines zweiten Anpassungskoeffizienten als den entsprechenden Anpassungskoeffizienten, wenn die Fahrspurlinie eine weiße Fahrspurlinie ist;
wobei ein Wert des ersten Anpassungskoeffizienten größer als ein Wert des zweiten Anpassungskoeffizienten ist.

4. Verfahren nach Anspruch 3, wobei das Bestimmen des zweiten Anpassungskoeffizienten als des entsprechenden Anpassungskoeffizienten, wenn die Fahrspurlinie die weiße Fahrspurlinie ist, umfasst:
Erfassen eines Linientyps der weißen Fahrspurlinie;
wenn der Linientyp der weißen Fahrspurlinie eine durchgezogene Linie ist, Setzen des Werts des zweiten Anpassungskoeffizienten auf einen ersten Wert und Bestimmen des zweiten Anpassungskoeffizienten als den entsprechenden Anpassungskoeffizienten,
wenn der Linientyp der weißen Fahrspurlinie eine gestrichelte Linie ist, Setzen des Werts des zweiten Anpassungskoeffizienten auf einen zweiten Wert und Bestimmen des zweiten Anpassungskoeffizienten als den entsprechenden Anpassungskoeffizienten,
wobei der erste Wert größer als der zweite Wert ist.

5. Verfahren nach Anspruch 3, weiter umfassend, nach dem Erfassen der Farbe der Fahrspurlinie:
wenn die Fahrspurlinie nicht die weiße Fahrspurlinie oder die gelbe Fahrspurlinie ist, Bestimmen eines dritten Anpassungskoeffizienten als den der Fahrspurlinie entsprechenden Anpassungskoeffizienten,
wobei das Bestimmen der aktuellen Eingriffsdistanz für das Fahrzeug gemäß der Nennzeit des Fahrzeugs, der Lateralgeschwindigkeit des Fahrzeugs, des Nennversatzwerts des Fahrzeugs und des Anpassungskoeffizienten umfasst:
Erhalten eines aktuellen Frühwarn-Lateralabstands für das Fahrzeug gemäß der Nennzeit des Fahrzeugs, der Lateralgeschwindigkeit des Fahrzeugs und des Nennversatzwerts des Fahrzeugs; und
Erhalten der aktuellen Eingriffsdistanz für das Fahrzeug gemäß einem Produkt des aktuellen Frühwarn-Lateralabstands für das Fahrzeug und des Anpassungskoeffizienten.

6. System zur Spurhalte-Steuerung eines Fahrzeugs, umfassend:
eine Identifikationseinheit (301), die dazu konfiguriert ist, eine Fahrspurlinie in einem aufgenommenen Video der Umgebung vor dem Fahrzeug zu erfassen, einen Typ der Fahrspurlinie zu identifizieren und einen entsprechenden Anpassungskoeffizienten gemäß dem Typ der Fahrspurlinie zu bestimmen;
**gekennzeichnet dadurch, dass**
das System zur Spurhalte-Steuerung des Fahrzeugs umfasst ferner:
eine Berechnungseinheit (302), die dazu konfiguriert ist, eine aktuelle Eingriffsdistanz für das Fahrzeug gemäß einer Nennzeit des Fahrzeugs, einer Lateralgeschwindigkeit des Fahrzeugs, eines Nennversatzwerts des Fahrzeugs und des Anpassungskoeffizienten zu bestimmen, wobei die Nennzeit verwendet wird, um die Zeit anzugeben, die eine Außenkante eines Vorderrads des Fahrzeugs benötigt, um eine Innenkante einer Fahrspurlinie zu erreichen, und wobei der Nennversatzwert verwendet wird, um einen Lateralabstand anzugeben, über den sich die Innenkante der Fahrspurlinie in Richtung auf das Fahrzeug erstreckt; und
eine Eingriffseinheit (303), die dazu konfiguriert ist, eine Lenkeingriffsanfrage an das Fahrzeug zu senden, wenn die Eingriffsdistanz kleiner als ein voreingestellter Distanzschwellenwert ist, um das Fahrzeug in einer durch die Fahrspurlinie definierten Fahrspur zu halten.

7. System zur Spurhalte-Steuerung des Fahrzeugs nach Anspruch 6, umfassend ferner:
eine Bedingungserfassungseinheit (304), die dazu konfiguriert ist, eine aktuelle Geschwindigkeit des Fahrzeugs zu erfassen und zu erfassen, ob ein Blinker des Fahrzeugs derzeit ausgeschaltet ist,
wobei die Identifikationseinheit (301) dazu konfiguriert ist, das Erfassen der Fahrspurlinie in dem aufgenommenen Video der Umgebung vor dem Fahrzeug durchzuführen, wenn die aktuelle Geschwindigkeit des Fahrzeugs innerhalb eines voreingestellten Geschwindigkeitsbereichs liegt und der Blinker des Fahrzeugs ausgeschaltet ist.

8. System zur Spurhalte-Steuerung des Fahrzeugs nach Anspruch 7, wobei die Identifikationseinheit (301) umfasst:
eine Farbdetektionseinheit (401), die dazu konfiguriert ist, eine Farbe der Fahrspurlinie zu erfassen;
eine erste Bestimmungseinheit (402), die dazu konfiguriert ist, einen ersten Anpassungskoeffizienten als den entsprechenden Anpassungskoeffizienten zu bestimmen, wenn die Fahrspurlinie eine gelbe Fahrspurlinie ist;
eine zweite Bestimmungseinheit (403), die dazu konfiguriert ist, einen zweiten Anpassungskoeffizienten als den entsprechenden Anpassungskoeffizienten zu bestimmen, wenn die Fahrspurlinie eine weiße Fahrspurlinie ist;
wobei ein Wert des ersten Anpassungskoeffizienten größer als ein Wert des zweiten Anpassungskoeffizienten ist.

9. System zur Spurhalte-Steuerung des Fahrzeugs nach Anspruch 8, wobei die zweite Bestimmungseinheit (403) umfasst:
eine Linientyp-Detektionseinheit (404), die dazu konfiguriert ist, einen Linientyp der weißen Fahrspurlinie zu erfassen;
eine erste Bestimmungsuntereinheit (405), die dazu konfiguriert ist, den Wert des zweiten Anpassungskoeffizienten auf einen ersten Wert einzustellen und den zweiten Anpassungskoeffizienten als den entsprechenden Anpassungskoeffizienten zu bestimmen, wenn der Linientyp der weißen Fahrspurlinie eine durchgezogene Linie ist; und
eine zweite Bestimmungsuntereinheit (406), die dazu konfiguriert ist, den Wert des zweiten Anpassungskoeffizienten auf einen zweiten Wert einzustellen und den zweiten Anpassungskoeffizienten als den entsprechenden Anpassungskoeffizienten zu bestimmen, wenn der Linientyp der weißen Fahrspurlinie eine gestrichelte Linie ist,
wobei der erste Wert größer als der zweite Wert ist.

10. System zur Spurhalte-Steuerung des Fahrzeugs nach Anspruch 8, wobei die Identifikationseinheit (301) ferner umfasst:
eine dritte Bestimmungseinheit (407), die dazu konfiguriert ist, nachdem die Farbdetektionseinheit (401) die Farbe der Fahrspurlinie erfasst hat, einen dritten Anpassungskoeffizienten als den der Fahrspurlinie entsprechenden Anpassungskoeffizienten zu bestimmen, wenn die Fahrspurlinie nicht die weiße Fahrspurlinie oder die gelbe Fahrspurlinie ist;
wobei die Berechnungseinheit (302) weiter dazu konfiguriert ist:
einen aktuelle Frühwarn-Lateralabstand für das Fahrzeug gemäß der Nennzeit des Fahrzeugs, der Lateralgeschwindigkeit des Fahrzeugs und des Nennversatzwerts des Fahrzeugs zu erhalten; und
die aktuelle Eingriffsdistanz für das Fahrzeug gemäß einem Produkt des aktuellen Frühwarn-Lateralabstands für das Fahrzeug und dem der Fahrspurlinie entsprechenden Anpassungskoeffizienten zu erhalten.

## Revendications

1. Un procédé de commande de maintien dans la voie d'un véhicule, comprenant :
la détection d'une ligne de voie dans une vidéo capturée de l'environnement devant le véhicule, l'identification d'un type de la ligne de voie et la détermination d'un coefficient d'ajustement correspondant conformément au type de la ligne de voie (101) ;
**caractérisé en ce que**,
le procédé comprend en outre :
la détermination (102) d'une distance d'intervention actuelle pour le véhicule conformément à un temps nominal du véhicule, à une vitesse latérale du véhicule, à une valeur de décalage nominale du véhicule et au coefficient d'ajustement, le temps nominal étant utilisé pour indiquer le temps nécessaire au bord extérieur d'une roue avant du véhicule pour atteindre le bord intérieur d'une ligne de voie, la valeur de décalage nominale étant utilisée pour indiquer une distance latérale sur laquelle le bord intérieur de la ligne de voie s'étend dans une direction vers le véhicule ; et
l'envoi (103) d'une demande d'intervention de direction au véhicule lorsque la distance d'intervention est inférieure à un seuil de distance prédéfini, de manière à maintenir le véhicule en mouvement dans une voie définie par la ligne de voie.

2. Le procédé selon la revendication 1, comprenant en outre :
la détection d'une vitesse actuelle du véhicule et la détection de l'état d'extinction actuel d'un clignotant du véhicule ; et
l'exécution de ladite détection de la ligne de voie dans la vidéo capturée de l'environnement devant le véhicule, lorsque la vitesse actuelle du véhicule se situe dans une plage de vitesse prédéfinie et que le clignotant du véhicule est éteint.

3. Le procédé selon la revendication 2, dans lequel ladite identification du type de la ligne de voie et la détermination du coefficient d'ajustement correspondant conformément au type de la ligne de voie comprennent :
la détection (201) d'une couleur de la ligne de voie ;
la détermination (202) d'un premier coefficient d'ajustement comme le coefficient d'ajustement correspondant, lorsque la ligne de voie est une ligne de voie jaune ; et
la détermination (203) d'un second coefficient d'ajustement comme le coefficient d'ajustement correspondant, lorsque la ligne de voie est une ligne de voie blanche,
dans lequel une valeur du premier coefficient d'ajustement est supérieure à une valeur du second coefficient d'ajustement.

4. Le procédé selon la revendication 3, dans lequel ladite détermination du second coefficient d'ajustement comme le coefficient d'ajustement correspondant lorsque la ligne de voie est la ligne de voie blanche comprend :
la détection d'un type de ligne de la ligne de voie blanche ;
lorsque le type de ligne de la ligne de voie blanche est une ligne continue, la définition de la valeur du second coefficient d'ajustement comme étant une première valeur et la détermination du second coefficient d'ajustement comme le coefficient d'ajustement correspondant ;
lorsque le type de ligne de la ligne de voie blanche est une ligne pointillée, la définition de la valeur du second coefficient d'ajustement comme étant une seconde valeur et la détermination du second coefficient d'ajustement comme le coefficient d'ajustement correspondant,
dans lequel la première valeur est supérieure à la seconde valeur.

5. Le procédé selon la revendication 3, comprenant en outre, après ladite détection de la couleur de la ligne de voie :
lorsque la ligne de voie n'est ni la ligne de voie blanche ni la ligne de voie jaune, la détermination d'un troisième coefficient d'ajustement comme le coefficient d'ajustement correspondant à la ligne de voie,
dans lequel ladite détermination de la distance d'intervention actuelle pour le véhicule conformément au temps nominal du véhicule, à la vitesse latérale du véhicule, à la valeur de décalage nominale du véhicule et au coefficient d'ajustement comprend :
l'obtention d'une distance latérale d'alerte précoce actuelle pour le véhicule conformément au temps nominal du véhicule, à la vitesse latérale du véhicule et à la valeur de décalage nominale du véhicule ; et
l'obtention de la distance d'intervention actuelle pour le véhicule conformément au produit de la distance latérale d'alerte précoce actuelle pour le véhicule et du coefficient d'ajustement.

6. Un système de commande de maintien dans la voie d'un véhicule, comprenant :
une unité d'identification (301) configurée pour détecter une ligne de voie dans une vidéo capturée de l'environnement devant le véhicule, identifier un type de la ligne de voie et déterminer un coefficient d'ajustement correspondant conformément au type de la ligne de voie ;
**caractérisé en ce que**,
le système de commande de maintien dans la voie du véhicule comprend en outre :
une unité de calcul (302) configurée pour déterminer une distance d'intervention actuelle pour le véhicule conformément à un temps nominal du véhicule, à une vitesse latérale du véhicule, à une valeur de décalage nominale du véhicule et au coefficient d'ajustement, le temps nominal étant utilisé pour indiquer le temps nécessaire au bord extérieur d'une roue avant du véhicule pour atteindre le bord intérieur d'une ligne de voie, la valeur de décalage nominale étant utilisée pour indiquer une distance latérale sur laquelle le bord intérieur de la ligne de voie s'étend dans une direction vers le véhicule ; et
une unité d'intervention (303) configurée pour envoyer une demande d'intervention de direction au véhicule lorsque la distance d'intervention est inférieure à un seuil de distance prédéfini, de manière à maintenir le véhicule en mouvement dans une voie définie par la ligne de voie.

7. Le système de commande de maintien dans la voie du véhicule selon la revendication 6, comprenant en outre :
une unité de détection de condition (304) configurée pour détecter une vitesse actuelle du véhicule et détecter l'état d'extinction actuel d'un clignotant du véhicule,
dans lequel l'unité d'identification (301) est configurée pour exécuter ladite détection de la ligne de voie dans la vidéo capturée de l'environnement devant le véhicule, lorsque la vitesse actuelle du véhicule se situe dans une plage de vitesse prédéfinie et que le clignotant du véhicule est éteint.

8. Le système de commande de maintien dans la voie du véhicule selon la revendication 7, dans lequel l'unité d'identification (301) comprend :
une unité de détection de couleur (401) configurée pour détecter une couleur de la ligne de voie ;
une première unité de détermination (402) configurée pour déterminer un premier coefficient d'ajustement comme le coefficient d'ajustement correspondant, lorsque la ligne de voie est une ligne de voie jaune ;
une seconde unité de détermination (403) configurée pour déterminer un second coefficient d'ajustement comme le coefficient d'ajustement correspondant, lorsque la ligne de voie est une ligne de voie blanche,
dans lequel une valeur du premier coefficient d'ajustement est supérieure à une valeur du second coefficient d'ajustement.

9. Le système de commande de maintien dans la voie du véhicule selon la revendication 8, dans lequel la seconde unité de détermination (403) comprend :
une unité de détection de type de ligne (404) configurée pour détecter un type de ligne de la ligne de voie blanche ;
une première sous-unité de détermination (405) configurée pour définir la valeur du second coefficient d'ajustement comme étant une première valeur et déterminer le second coefficient d'ajustement comme le coefficient d'ajustement correspondant, lorsque le type de ligne de la ligne de voie blanche est une ligne continue ; et
une seconde sous-unité de détermination (406) configurée pour définir la valeur du second coefficient d'ajustement comme étant une seconde valeur et déterminer le second coefficient d'ajustement comme le coefficient d'ajustement correspondant, lorsque le type de ligne de la ligne de voie blanche est une ligne pointillée,
dans lequel la première valeur est supérieure à la seconde valeur.

10. Le système de commande de maintien dans la voie du véhicule selon la revendication 8, dans lequel l'unité d'identification (301) comprend en outre :
une troisième unité de détermination (407) configurée pour déterminer, après que l'unité de détection de couleur (401) a détecté la couleur de la ligne de voie, un troisième coefficient d'ajustement comme le coefficient d'ajustement correspondant à la ligne de voie lorsque la ligne de voie n'est ni la ligne de voie blanche ni la ligne de voie jaune, et
dans lequel l'unité de calcul (302) est en outre configurée pour :
obtenir une distance latérale d'alerte précoce actuelle pour le véhicule conformément au temps nominal du véhicule, à la vitesse latérale du véhicule et à la valeur de décalage nominale du véhicule ; et
obtenir la distance d'intervention actuelle pour le véhicule conformément au produit de la distance latérale d'alerte précoce actuelle pour le véhicule et du coefficient d'ajustement correspondant à la ligne de voie.
